Europäisches Patentamt

European Patent Office

Office européen des brevets

(11) Publication number: **0 002 934**
A1

# EUROPEAN PATENT APPLICATION

(21) Application number: **78300875.8**

(51) Int. Cl.²: **F 16 K 31/00, G 05 D 23/02**

(22) Date of filing: **20.12.78**

(30) Priority: **04.01.78 CA 294345**

(43) Date of publication of application: **11.07.79**
**Bulletin 79/14**

(84) Designated Contracting States: **BE CH DE FR GB IT NL SE**

(71) Applicant: **Braukmann, Heinz Werner, 5601 Steeles Avenue West, Weston Ontario (CA)**

(72) Inventor: **Braukmann, Heinz Werner, 5601 Steeles Avenue West, Weston Ontario (CA)**

(74) Representative: **Cook, Anthony John et al, D. YOUNG & CO. 9 & 10, Staple Inn, London, WC1V 7RD (GB)**

(54) **Thermostatic control valve.**

(57) A thermostatic control valve has a built-in temperature sensor (58) actuating a valve mechanism (20) to regulate flow of heated fluid through a conduit (14). The valve (10) has a housing (36) open at one end and securable to the conduit (14) at the other end. The sensor (58) is secured in the open end of the housing (36) and is responsive to changes in temperature of the air in the open end of the housing (36), the sensor (58) acting on a plunger (68) which in turn acts on the valve mechanism (20) at the other end of the housing to regulate fluid flow through the conduit (14).

Thermal shielding means (50, 70, 72) are provided in the housing (36) between the sensor (58) and the valve mechanism (20) to substantially prevent heat from the valve mechanism (20) affecting the sensor (58), and vents (46) are provided in the housing (36) below the thermal shielding means (50, 70, 72) to allow air heated by the valve mechanism (20) to escape to atmosphere.

- 1 -

## THERMOSTATIC CONTROL VALVE

This invention relates to thermostatic control valves of the kind which have a built-in temperature sensor which actuates a valve mechanism to regulate flow of heated fluid through a conduit. Such a valve may for example be connected to a radiator to control the temperature of a room heated thereby.

If such a thermostatic control valve is to operate satisfactorily, it should be subjected only to the ambient air and not be subjected to the heat emanating directly from the heated fluid. The temperature sensors of known valves of this kind may be influenced more by warm air emanating from the heated fluid then by the ambient air, due to entrapment of heated air in the valve. It has been found that such valves only operate satisfactorily if the valve is in a horizontal position and if the sensor is built into a handle. For installations with a thermostatic control valve located in a vertical position, a remote sensor or a remote control handle has to be used to provide proper temperature control.

It is therefore an object of the invention to provide a thermostatic control valve with a built-in temperature sensor which will satisfactorily control the temperature by response to the ambient temperature, whether the valve is installed on the conduit in a horizontal or a vertical position.

According to the invention, a thermostatic control valve has a housing open at one end and securable to the conduit at the other end. The sensor is secured in the open end of the housing and is responsive to changes in temperature of the air in the open end of the housing, the sensor acting on a plunger which in turn acts on the valve mechanism at the other end of the housing to regulate fluid flow throug the conduit. Thermal shielding means are provided in the housing between the sensor and the valve mechanism to substantially prevent heat from the valve mechanism affecting the sensor, and vents are provided in the housing below the thermal shielding means to allow air heated by the valve mechanism to escape to atmosphere.

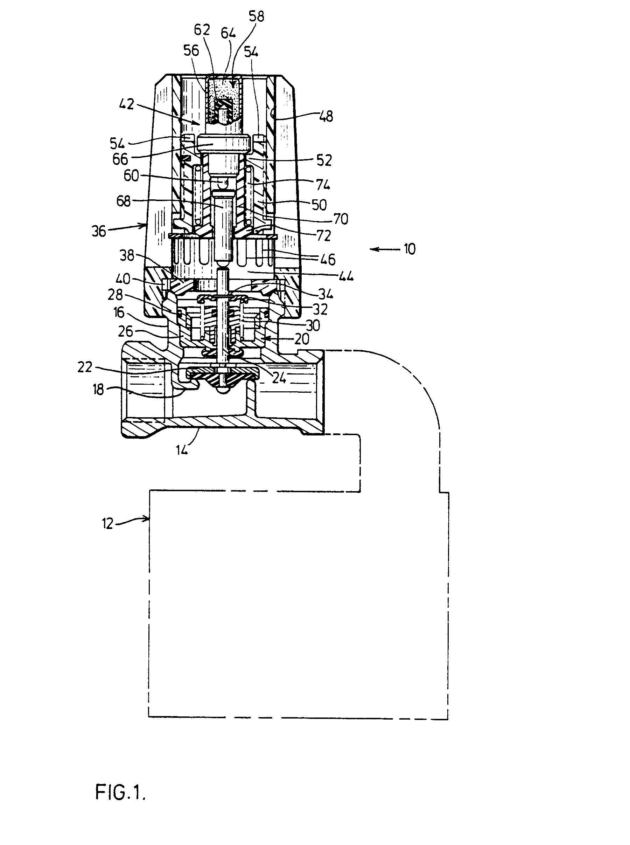

One embodiment of the invention will now be described, by way of example, with reference to the accompanying drawing, which is a cross-sectional view of a thermostatic control valve.

Referring to the drawing, a thermostatic control valve 10 is constructed for threaded connection to a radiator 12 shown in dotted outline. The threaded connection is provided by a section 14 of a straight conduit, one end of which is connected to the radiator 12, and the other end being connected to a source (not shown) of heated fluid for the radiator.

The conduit section 14 has a spigot 16 extending above a valve seat 18 located in the conduit section 14. The spigot 16 surrounds a valve mechanism 20 having a valve plate 22 engageable with the valve seat 18 and carried by a valve stem 24. A valve stem guide 26 provided with an external seal 28 is threaded into the spigot 16, and the lower end of a valve spring 30, which surrounds the valve stem 24, bears against the upper surface of the valve stem guide 26. The upper end of the valve spring 30 bears against a valve plate 32 which is secured in place on the valve stem 24 by a circlip 34.

An open ended housing 36 is secured to the spigot 16. This can be effected by conventional threaded connection, but preferably a locking threaded engagement is used, the locking being provided by an annular washer 38 having pawls which engage with the inner teeth of a ring 40, the washer 38 being non-rotatably mounted on the spigot 16.

The interior of the housing 36 contains a thermostatic control assembly 42 which is pre-assembled in the housing 36 before its engagement with the spigot 16. The thermostatic control assembly 42 is spaced from the spigot 16 to provide a space 44 in the housing 34 which is vented by slits 46 in the wall 48 of the housing 36.

Above the slits 46, the interior of the wall 48 of the housing 36 is threaded to receive an externally threaded sleeve 50 which has an inwardly extending shoulder 52 adjacent its upper end. The upper surface of the sleeve 50 has diametrically opposed recesses 54 which permit engagement of a key, not shown, with the recesses 54 to permit rotatable adjustment of the position of sleeve 50 in the housing 36 and thereby adjust the temperature setting of the valve. The sleeve 50 is of material having low heat conductivity, such as synthetic plastic material.

The control assembly 42 includes a casing 56, the upper part of which contains a thermostatic sensor 58 which is responsive to changes in the temperature of the ambient air entering the open end of the housing 36.

The thermostatic sensor 58 may be constructed in any suitable manner, but a preferred construction, as illustrated, has a movable plunger 60 extending from the casing 56 and operable through the combined action of a surrounding rubber casing 62 surrounded by wax 64 which expands with increasing temperature to move plunger 60 downwardly. The casing 56 has a collar 66 which bears against the upper surface of the shoulder 52 of the sleeve 50.

The free end of the plunger 60 acts on a plunger 68 which, in turn, acts on the upper end of the valve stem 24 which extends beyond the spigot 16 into the housing. The plunger 68 is made of material having low heat conductivity, such as synthetic plastic material.

The portion of the casing 56 below the collar 66 is threaded to receive a sleeve 70 which is radially inwardly spaced from the sleeve 50, the lower end of the sleeve 70 having an outwardly extending shoulder 72. An overriding spring 74 is located in the space between the sleeves 50 and 70 with the upper and lower ends of the spring 74 bearing respectively against the shoulders 52 and 72. In addition to positioning the casing 56, the spring 74 acts as a relief if the temperature of the thermostatic sensor 58 rises excessively. The sleeve 70 is made of material having low heat conductivity such as synthetic plastic material.

The sleeves 50 and 70, with the rod 68, terminate at their lower ends adjacent to the upper ends of the slits 46 and, being made of plastic, provide a thermal shield for the sensor 58. Also, heated air emanating from the valve mechanism 20 is dissipated through the slits 46, so that the sensor 58 is affected only by the air flowing into the open end of the housing, this air flow being encouraged by the rise of warmer air escaping through the slits 46 and ascending outside the housing 36.

Other embodiments within the scope of the invention will be apparent to a person skilled in the art, the scope of the invention being defined in the appended claims.

CLAIMS

1. A thermostatic control valve having a built-in temperature sensor actuating a valve mechanism to regulate flow of heated fluid in a conduit, characterized in that the valve has a housing (36) open at one end and securable to the conduit at the other end over the valve mechanism (20), a sensor (58) secured in the open end of the housing (36) and responsive to change in temperature of the air in the open end of the housing (36), movable means (68) in the housing (36) responsive to the action of the sensor (58) to actuate the valve mechanism (20) to regulate fluid flow through the valve seat (18), thermal shielding means (50, 70, 72) in the housing (36) below the sensor (58) to substantially prevent heat from the valve mechanism (20) affecting the sensor (58), and air vents (46) in the housing (36) below the thermal shielding means (50, 70, 72) to allow air heated by the valve mechanism (20) to escape to atmosphere.

2. A thermostatic control valve according to claim 1 characterized in that the thermal shielding means (50, 70, 72) is made of synthetic plastic material.

3. A thermostatic control valve according to claim 2 characterized in that the thermal shielding means (50, 70, 72) includes a sleeve (50) in threaded engagement with the internal wall of housing (36), the sleeve (50) being rotatable to adjust the temperature setting of the valve.

4. A thermostatic control valve according to claim 1, claim 2 or claim 3 characterized in that the movable means (68) comprises a plunger, the valve mechanism (20) having a valve plate (22) co-operating with the valve seat (18), the valve plate (22) being carried by a valve stem (24) extending into the housing (36), and the lower end of the plunger (68) bearing against the upper end of the valve stem (24).

0002934

FIG.1.

**European Patent Office**

**EUROPEAN SEARCH REPORT**

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | DE - A - 2 537 033 (OVENTROP) <br> * page 6, lines 17, 18; page 8, lines 19, 20; fig. 1, positionen 5,6,7,16 * <br> -- | 1-4 | F 16 K 31/00 <br> G 05 D 23/02 |
| | DE - U - 7 418 564 (JUNKERS) <br> * entire document * <br> -- | 1-4 | |
| | DE - U - 7 418 563 (JUNKERS) <br> * page 4, lines 21 to 28; page 5, lines 13 to 15; page 6, lines 11 to 18; fig. 1, positionen 33, 34, 27, 23 * <br> -- | 1-3 | **TECHNICAL FIELDS SEARCHED (Int.Cl.²)** <br><br> F 16 K 31/00 <br> G 05 D 23/00 |
| | DE - A - 2 457 931 (O. GAMPPER) <br> * page 7, lines 11 to 27, fig. 1, positionen 8, 27, 28, 2, 4 * <br> -- | 1,2, 4 | |
| A | DE - A - 2 158 950 (ALBERT) <br> * fig. 1 * <br> -- | 1 | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| A | DE - A - 1 550 503 (SULZER) <br> * fig. 1, 2 * <br> -- <br> ./.. | 1 | |

| | &: member of the same patent family, corresponding document |
|---|---|
| ✗ The present search report has been drawn up for all claims | |

| Place of search | Date of completion of the search | Examiner |
|---|---|---|
| Berlin | 22-03-1979 | SCHLABBACH |

EPO Form 1503.1  06.78

European Patent Office

**EUROPEAN SEARCH REPORT**

| Category | Citation of document with indication, where appropriate, of relevant passages | Relevant to claim |
|---|---|---|
| | **DOCUMENTS CONSIDERED TO BE RELEVANT** | |
| A | GB - A - 946 275 (SULZER)<br>* page 1, lines 34 to 46;<br>fig. 1 * | 1 |
| A | US - A - 3 300 136 (M.W. ZÜBLIN)<br>* fig. 1, 2 * | 1 |

CLASSIFICATION OF THE APPLICATION (Int. Cl.²)

TECHNICAL FIELDS SEARCHED (Int. Cl.²)

EPO Form 1503.2    06.78